# FASCICULE DE BREVET EUROPEEN

(11) **EP 1 685 330 B1**
(45) Date de publication et mention de la délivrance du brevet: **13.06.2007**
(21) Numéro de dépôt: 04805456.3
(22) Date de dépôt: 16.11.2004
(51) Int. Cl.: F16B 7/00, F16L 21/06

(54) **SYSTEME DE LIAISON DE DEUX ARBRES EN TRANSLATION**
SYSTEM ZUR TRANSLATORISCHEN VERBINDUNG VON ZWEI WELLEN
SYSTEM FOR CONNECTING TWO SHAFTS IN TRANSLATION

(30) Priorité: 18.11.2003 FR 0313446
(43) Date de publication de la demande: 02.08.2006
(73) Titulaire: E.C.L., 59790 Ronchin (FR)
(72) Inventeur: BOURGES, Bernard, F-59710 Avelin (FR)
(74) Mandataire: Fénot, Dominique
(86) Numéro de dépôt international: PCT/FR2004/002918
(87) Numéro de publication internationale: WO 2005/050032

(56) Documents cités:
- EP-A- 0 539 955
- FR-A- 641 446
- FR-A- 1 107 422
- FR-A- 2 499 644
- FR-A- 2 516 607
- GB-A- 300 037
- US-A- 5 427 468

## Description

### DOMAINE TECHNIQUE

La présente invention se rapporte à un système de liaison mécanique et électrique entre les extrémités de deux arbres sensiblement coaxiaux, qui se déplacent suivant une direction globalement axiale et qui sont aptes à transmettre des efforts sensiblement axiaux. Une telle configuration se rencontre notamment lorsque l'on veut séparer un arbre en deux parties, pour protéger l'une de ses extrémités des sollicitations importantes (températures, contraintes, chocs latéraux, etc...) supportées par l'autre extrémité.

La présente invention concerne plus particulièrement les dispositifs de piquage employés dans les cuves de production d'aluminium par électrolyse. Ces derniers sont destinés à percer la croûte superficielle de bain solidifié. Ils sont souvent associés soit à des doseurs qui alimentent la cuve en alumine, soit à des dispositifs de mesure qui permettent de mesurer la température et le niveau de l'électrolyte dans la cuve de façon à permettre l'alimentation régulée du bain en alumine.

### ETAT DE LA TECHNIQUE

Le brevet FR 2 483 965 d'ALUMINIUM PECHINEY décrit un tel dispositif de piquage où le piqueur, appelé également plongeur, est associé à mécanisme de déplacement axial. Placé verticalement, il descend périodiquement pour briser la croûte de bain solidifié au point d'alimentation ou pour maintenir ouvert le trou aménagé dans cette croûte, de façon à ce que l'alumine, amenée par une canalisation, puisse pénétrer dans l'électrolyte fondu. Pour plusieurs raisons exposées dans FR 2 483 965, il est important de détecter si le plongeur , pendant son mouvement de descente, entre en contact avec de l'électrolyte fondu ou avec de l'électrolyte solidifié. La détection du contact entre l'extrémité du plongeur - appelée pointerolle - et l'électrolyte fondu est réalisée par la mesure d'une tension électrique entre le plongeur et un point de la cellule pris comme potentiel de référence. Typiquement, le plongeur est isolé électriquement par rapport à la superstructure de la cuve et, lorsque la pointerolle arrive en contact avec le bain d'électrolyte fondu, celle-ci atteint un potentiel électrique voisin de celui de l'électrolyte fondu. La mesure de ce potentiel sert d'information pour donner l'ordre de remontée du plongeur.

Le brevet EP-B-0 716 165 décrit un dispositif de piquage entourant et protégeant un dispositif de mesure, qui mesure non seulement le niveau du bain mais aussi sa température. Pour un tel dispositif, il est aussi important de détecter le moment où le piqueur entre en contact avec l'électrolyte fondu et ce dernier est également muni d'un dispositif de détection basé sur la mesure d'une tension électrique entre le plongeur et un point de la cellule pris comme potentiel de référence.

Le brevet FR-A-2499644 décrit un système d'accouplement entre deux arbres comprenant deux gorges.

### PROBLEME POSE

Au niveau de la pointerolle, le plongeur est soumis à des sollicitations violentes tant thermiques que mécaniques. Plus la pointerolle reste longtemps dans le bain d'électrolyte, plus grand est le risque de formation d'une croûte sur sa surface à la remontée, croûte qui peut grossir au cours des opérations suivantes, créant des problèmes de fonctionnement et provoquant une usure prématurée du plongeur.

Le plongeur ne peut correctement fonctionner que s'il n'est pas trop déformé et s'il reste électriquement fiable: il doit rester à tout moment isolé électriquement de la superstructure de la cuve et doit assurer à tout moment le passage d'un courant électrique pour détecter le contact avec le de bain d'électrolyte. De plus, comme la pointerolle peut s'user rapidement et se déformer progressivement, il est important de prévoir un moyen permettant de la remplacer régulièrement et facilement. Enfin, l'autre extrémité du plongeur est reliée à un dispositif de mise en mouvement axial, typiquement un vérin, qui ne peut fonctionner correctement qu'à une température voisine de la température ambiante et sans subir des sollicitations mécaniques trop fortes, étant particulièrement sensible aux chocs latéraux.

Pour toutes ces raisons, le plongeur a été découplé en deux parties sensiblement coaxiales: une tige associée au vérin de commande et une tige - appelée rallonge - qui comprend la pointerolle en une de ses extrémités. Ces deux parties sont communément réunies entre elles par un système vis-écrou mais ce système ne donne pas entière satisfaction car il transmet sans vraiment les amortir les chocs mécaniques supportés par la pointerolle, notamment les efforts latéraux brutaux qui nuisent au bon fonctionnement du vérin. De plus, le système vis-écrou présente fréquemment des difficultés au desserrage - par exemple lorsqu'il faut remplacer la pointerolle - et ne permet pas d'assurer de façon fiable un contact électrique permanent.

La demanderesse a donc développé un système de liaison entre les deux parties du plongeur qui ne présente pas ces inconvénients.

### OBJET DE L'INVENTION

L'invention consiste en un système de liaison mécanique et électrique entre les extrémités de deux arbres sensiblement coaxiaux, qui se déplacent suivant une direction globalement axiale et qui sont aptes à transmettre des efforts sensiblement axiaux, l'un des arbres, appelé "arbre menant", étant relié à un dispositif de mise en translation axiale, typiquement un vérin, l'autre arbre, appelé "arbre mené" étant typiquement équipé d'un dispositif de mesure. Ce système est défini selon la revendication 1.

Selon l'invention, le premier épaulement annulaire du manchon a une forme complémentaire et sans jeu de celle de la gorge annulaire de l'arbre menant alors que le deuxième épaulement annulaire du manchon a une forme complémentaire de celle de la gorge annulaire de l'arbre mené, un jeu radial étant prévu entre les surfaces complémentaires de l'épaulement annulaire dudit manchon et de la gorge annulaire dudit arbre mené.

L'absence de jeu entre la gorge de l'arbre menant et l'épaulement du manchon permet de mettre en coïncidence les axes de ces derniers. Par contre, le jeu ménagé entre les surfaces complémentaires de l'épaulement annulaire du manchon et de la gorge annulaire de l'arbre mené permet de diminuer l'ampleur des chocs latéraux imposés à l'arbre mené au niveau de la pointerolle et transmis vers l'arbre menant par l'intermédiaire du manchon.

De préférence, la section de la gorge annulaire de l'arbre menant est en U, de telle sorte qu'elle présente deux parois perpendiculaires à l'axe distantes d'une hauteur axiale H0 et un "fond" sous forme de surface cylindrique coaxiale avec ledit axe de diamètre C et la section du premier épaulement annulaire du manchon a également une forme globale en U, avec deux parois perpendiculaires à l'axe distantes d'une valeur très légèrement inférieure à H0, typiquement H0 - ε avec 0,05 mm ≤ ε ≤ 0,2 mm et une paroi cylindrique ayant un diamètre C très légèrement supérieur à celui de la gorge annulaire, typiquement C + ε' avec 0,05 mm ≤ ε' ≤ 0,2 mm.

De préférence également, la section de la gorge annulaire de l'arbre mené présente deux parois perpendiculaires à l'axe distantes d'une hauteur axiale H3 et un "fond" cylindrique de diamètre G et la section du deuxième épaulement annulaire du manchon a également une forme globale en U, avec deux parois perpendiculaires à l'axe distantes d'une valeur H4 inférieure à H3 et une paroi cylindrique ayant un diamètre supérieur à celui de la gorge annulaire de l'arbre mené. Enfin, pour compléter le jeu ménagé entre la surface interne du manchon et la surface externe de l'extrémité de l'arbre mené et diminuer ainsi l'ampleur des chocs latéraux susceptibles d'être transmis par le manchon à l'arbre menant, on ménage un jeu radial entre la surface extérieure du prolongement axial d'extrémité de l'arbre mené et la paroi de la cavité ménagée dans le manchon destinée à recueillir les prolongements axiaux d'extrémité des deux arbres.

De préférence également, le prolongement axial d'extrémité de l'arbre menant comporte une protubérance dont l'extrémité finale présente une paroi transversale occupant une surface plane ou de révolution par rapport à l'axe de l'arbre, convexe et de faible courbure en son milieu, tandis que le prolongement axial d'extrémité de l'arbre mené comporte une protubérance dont l'extrémité finale présente une paroi transversale dont le profil est tel que, lorsque les deux arbres sont mis en contact, la zone de contact de ladite protubérance avec celle de l'arbre menant se situe en un point aussi proche que possible de l'axe de l'arbre menant. Une telle paroi transversale peut par exemple présenter une surface de révolution autour de l'axe de l'arbre mené, convexe et avec une courbure en son milieu plus importante que celle de la paroi transversale de la protubérance de l'arbre menant.

De préférence, les prolongement axiaux d'extrémité de chaque arbre comportent une base située entre la gorge annulaire et la protubérance. La base et la protubérance sont agencées de telle sorte que ledit moyen élastique conducteur puisse trouver un appui sur chacun des arbres, permettant ainsi d'assurer en permanence un contact électrique entre les deux arbres. La base de chaque prolongement axial d'extrémité peut avoir une forme cylindrique avec un diamètre plus grand que celui de la protubérance, de sorte qu'il se forme un décrochement entre ladite base et ladite protubérance. Si le moyen élastique conducteur est un ressort hélicoïdal métallique, on définir la forme et la position du décrochement ainsi que la forme du ressort à spirale de telle sorte que le ressort est guidé axialement en son extrémité par la protubérance et que l'extrémité du ressort vient en appui contre ledit décrochement.

De préférence encore, pour éviter toute perturbation latérale, on évite tout contact entre les deux arbres en un endroit autre que le point de contact entre les protubérances, lui-même situé le plus près possible de l'axe de l'arbre menant. Ainsi, pour éviter la transmission d'efforts par le manchon, la paroi d'extrémité dudit manchon, située du côté de l'arbre mené est agencée de telle sorte qu'elle ne peut entrer en contact avec celui-ci, même après matage, voire usure des surfaces de contact entre les deux arbres. Ainsi, lorsque l'on reprend les géométries des gorges et des épaulements en U, l'écart H3-H4, c'est-à-dire la différence entre la hauteur axiale H3 de la gorge annulaire de l'arbre mené et la hauteur axiale H4 du deuxième épaulement annulaire du manchon, cet écart doit rester toujours supérieur au jeu maximum pouvant exister entre les extrémités respectives des protubérances de l'arbre menant et de l'arbre mené.

Dans une modalité préférée de l'invention, l'extrémité de l'arbre menant comprend une gorge annulaire et un prolongement axial d'extrémité adjacents, de sorte que, la base cylindrique du prolongement axial d'extrémité ayant un diamètre supérieur à celui de la gorge annulaire, il se forme une paroi transversale destinée à entrer en contact avec le premier épaulement du manchon. De même, l'extrémité de l'arbre mené comprend une gorge annulaire et un prolongement axial d'extrémité adjacents, de sorte que, la base cylindrique du prolongement axial d'extrémité ayant un diamètre supérieur à celui de la gorge annulaire, il se forme une paroi transversale destinée à entrer en contact avec le deuxième épaulement du manchon. De la sorte, le deuxième épaulement du manchon est séparé du premier épaulement de telle sorte qu'ils délimitent ensemble dans ledit manchon la cavité destinée à recevoir les prolongements axiaux d'extrémité des arbres.

Pratiquement, le manchon est réalisé en plusieurs pièces, par exemple deux coquilles en forme de demi-cylindre, comportant sur leur face intérieure les dits premier et deuxième épaulement. Ces coquilles sont placées de telle sorte que les premier et deuxième épaulements viennent en regard des gorges annulaires des arbres menant et mené, puis elles sont maintenues solidaires l'une de l'autre à l'aide d'un fourreau cylindrique emmanché par une extrémité sur l'un des arbres et que l'on fait coulisser pour qu'elle recouvre l'ensemble des deux coquilles préalablement assemblées. Ce fourreau est ensuite immobilisé à l'aide de systèmes conventionnels: goupilles traversant ledit fourreau et l'une des coquilles, jonc, écrou, vis-pointeau, etc.... Le manchon et le fourreau sont de préférence en métal, typiquement en acier ou en laiton.

Bien évidemment, les géométries peuvent être interverties: les arbres peuvent être munis d'épaulements annulaires et le manchon peut être muni d'une première et d'une deuxième gorges annulaires, de formes complémentaires. De même, les formes respectives des extrémités des protubérances sont interchangeables. De même encore, l'association de l'alignement coaxial du manchon sur l'arbre menant (absence de jeu entre la gorge annulaire de l'arbre menant et le premier épaulement du manchon) et des jeux radial et axial ménagés entre la gorge annulaire de l'arbre mené et le deuxième épaulement du manchon peut être remplacé par une association symétrique: alignement coaxial du manchon sur l'arbre mené (absence de jeu entre la gorge annulaire de l'arbre mené et le deuxième épaulement du manchon) associé à des jeux radial et axial ménagés entre la gorge annulaire de l'arbre menant et le premier épaulement du manchon.

Pour mieux comprendre l'invention, nous décrivons ci-après un mode de réalisation particulier, spécifiquement adapté aux systèmes de piquage employés dans les cuves d'électrolyse.

La figure 1 illustre une coupe diamétrale d'un système selon l'invention.

La figure 2 est une section suivant le plan I-I du système représenté en figure 1.

### DESCRIPTION DETAILLEE DE L'INVENTION

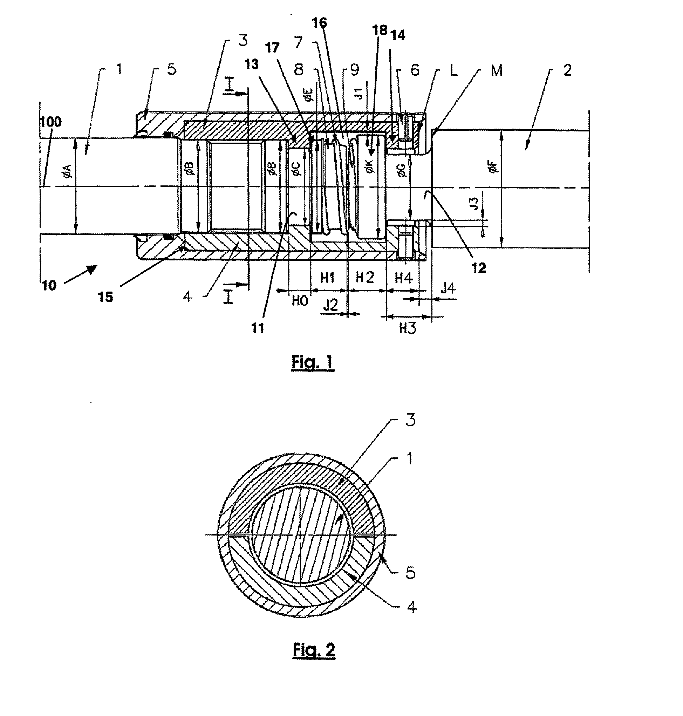

Le système représenté suivant la figure 1 montre un moyen de liaison entre deux arbres **1** et **2**. Ce moyen est conçu de façon à permettre à l'arbre **1** d'entraîner l'arbre **2** en translation dans les deux sens soit en le tirant, soit en le poussant. L'arbre **1** a son propre système de guidage en translation (non représenté). L'arbre **2** a aussi son propre système de guidage en translation (non représenté) et les sollicitations radiales sur l'arbre **2** ne doivent pas (ou le moins possible) engendrer de sollicitation radiale sur l'arbre **1.** De plus, le système de liaison entre ces deux arbres doit être facilement démontable sans risque d'endommagement des pièces.

Pour obtenir ce résultat :
a) L'arbre **1** appelé arbre menant de diamètre **ØA** possède une zone de centrage de diamètre **ØB** pour le système proposé. Les deux portées de diamètre **ØB** sont légèrement inférieures au diamètre **ØA** de façon à passer librement dans l'élément de guidage de l'arbre menant 1 sur le diamètre **ØA.**
   L'extrémité de l'arbre menant **1** est aménagée d'une rainure - ou gorge - circulaire **11** de diamètre intérieur **ØC** et de largeur - ou hauteur axiale - **H0** permettant l'engagement d'un premier épaulement du système de liaison proposé. Ainsi, ce système de liaison est centré sur les diamètres **ØB** et lié en translation par un épaulement **13** venant se loger dans la rainure **11** de diamètre intérieur **ØC** et de largeur **H0.**
   L'extrémité de l'arbre menant **1** est munie, a proximité de la gorge circulaire **11** d'un prolongement axial d'extrémité de hauteur **H1.** Ce prolongement comprend une base cylindrique **17** de diamètre **ØE** et une protubérance **8.** Le diamètre **ØE** de l'extrémité de l'arbre menant **1** peut être égal au diamètre **ØB** ou très légèrement inférieur (quelque dixièmes de millimètre seulement pour conserver un épaulement suffisant).
b) L'arbre **2** appelé arbre mené de diamètre **ØF** possède une rainure **12** de diamètre **ØG** et de largeur **H3** permettant l'engagement d'un second épaulement **14** du système de liaison proposé. Ainsi lorsque ce système de liaison est mis en place, les deux arbres sont liés en translation.
   L'extrémité de l'arbre mené **2** est munie également, a proximité de la gorge annulaire **12** d'un prolongement axial d'extrémité de hauteur **H2.** Ce prolongement comprend une base cylindrique **18** de diamètre **ØK** et une protubérance **9.** L'extrémité de cette protubérance **9** a un profil tel que, lorsque l'arbre menant **1** et l'arbre mené **2** sont en contact, leur point de contact se situe à une distance aussi faible que possible de l'axe de l'arbre menant 1. Ainsi, en cas de désaxage des guidages des arbres **1** et **2,** le contact entre ces deux arbres se fait au voisinage de leur axe quand l'arbre **1** pousse l'arbre **2,** par exemple.
c) Le système de liaison comprend un manchon **10** composé de trois pièces principales: deux coquilles **3** et **4** identiques, en forme de demi-cylindres, possédant chacune deux épaulements complémentaires qui forment après réunion des coquilles les épaulements annulaires **13** et **14** du manchon. Le premier épaulement **13** vient s'engager sans jeu dans la gorge annulaire **11** de l'arbre menant **1.** Le second épaulement **14** vient s'engager avec jeu dans la gorge **12** de l'arbre mené **2.** Ces deux coquilles possèdent un demi alésage de diamètre **ØB** permettant leur centrage sur le diamètre **ØB** de l'arbre menant **1.**

Les deux coquilles **3** et **4** sont élaborées à partir d'une pièce cylindrique qui après usinage complet pour obtenir les fonctions décrites précédemment est coupée suivant un plan axial de façon à obtenir deux morceaux identiques. Elles sont maintenues en position par un fourreau **5** qui vient se centrer sur leur diamètre extérieur de façon à les immobiliser parfaitement par rapport à l'arbre menant **1.** L'immobilisation en translation du fourreau **5** par rapport aux demi coquilles **3** et **4** est assurée par un épaulement **15** et deux goupilles **6** centrées dans chacune des deux coquilles **3** et **4** et venant se loger dans deux trous percés diamétralement opposés dans le fourreau **5.** Le système d'immobilisation du fourreau est donné à titre indicatif sachant que d'autres systèmes tels que jonc, écrou, vis pointeaux peuvent être utilisés.

Pour permettre le déplacement de l'arbre **2** par rapport à l'arbre **1,** le système de liaison est conçu de façon à laisser :
- Un jeu radial **J1** entre la pièce de liaison (le manchon **10)** et la base du prolongement axial de l'arbre mené **2.** La cavité **16** ménagée dans le manchon **10** pour recevoir le prolongement axial d'extrémité de l'arbre menant **1** et le prolongement axial d'extrémité de l'arbre mené **2** est un alésage dont le diamètre est défini de telle sorte qu'il existe un jeu radial J1 entre cet alésage et le diamètre **ØK** de la base cylindrique **18** du prolongement axial d'extrémité de l'arbre mené **2.**
- Un jeu axial **J2** entre les deux extrémités des arbres **1** et **2.** Le deuxième épaulement **14** est séparé du premier épaulement **13** de telle sorte qu'ils délimitent ensemble dans le manchon **10** la cavité **16 -** destinée à recevoir lesdites extrémités - dont la hauteur axiale est strictement supérieure à la somme des hauteurs axiales **H1** et **H2** des prolongements axiaux d'extrémités desdits arbres.
- Un jeu radial **J3** entre le fond de la gorge **12** de l'arbre mené **2** et le 2ème épaulement **14** du système de liaison.
- Un jeu axial **J4** entre l'extrémité **L** du système de liaison et le flanc **M** de la gorge **12** de l'arbre mené **2** tel que, même après matage des extrémités des deux arbres, il n'y ait pas contact dans cette zone. Ainsi, pour éviter la transmission d'efforts par le manchon **10,** la paroi d'extrémité **L** dudit manchon, située du côté de l'arbre mené **2** est agencée de telle sorte qu'elle ne peut entrer en contact avec celui-ci, même après matage, voire usure des surfaces de contact entre les deux arbres. Ainsi, la différence entre la hauteur axiale **H3** de la gorge annulaire **12** de l'arbre mené **2** et la hauteur axiale **H4** de l'épaulement annulaire **14** du manchon **10** reste toujours supérieur au jeu maximum **J2** pouvant exister entre les extrémités respectives de la protubérance **8** de l'arbre menant **1** et de la protubérance **9** de l'arbre mené **2**.

Ce système d'immobilisation en translation des deux arbres **1** et **2** trouve une première application dans les systèmes de piquage de croûte et d'alimentation en alumine des cuves d'électrolyse d'aluminium. On réalise ainsi la liaison de la tige du vérin pneumatique de piquage avec la tige rallonge qui supporte la pointerolle.

En l'occurrence, l'arbre menant **1** est la tige du vérin pneumatique et l'arbre mené **2** est la tige rallonge qui supporte la pointerolle. Ce système permet la liaison mécanique entre les arbres **1** et **2** et du fait de cette liaison parfaitement contrôlée, il permet d'installer un ressort de contact **7** entre les deux tiges pour faire passer un signal électrique d'une tige à l'autre et permettre ainsi la mesure d'un potentiel électrique existant entre l'extrémité de la pointerolle et un point de la cuve d'électrolyse pris comme référence.

Les dispositions constructives concernant les appuis et guidage du ressort **7** sur chacune des tiges sont telles que, quels que soient les efforts ou les mouvements donnés à chacune des tiges, la continuité du passage du courant est assurée. Le ressort **7** est un ressort métallique hélicoïdal. Il est centré sur chacune des extrémités de la tige de vérin (arbre menant **1**) et de la tige rallonge qui supporte la pointerolle (arbre mené **2**). La forme et la position de la base **17** et de la protubérance **8** de la tige de vérin **1**, la forme et la position de la base **18** et de la protubérance **9** de la tige rallonge **2,** ainsi que la forme du ressort **7** lui même sont définies pour que le ressort **7** possède toujours un bon appui sur chacune des tiges permettant ainsi d'assurer en permanence le contact du ressort sur ces extrémités.

Le centrage du ressort **7** sur la tige **1** et le centrage du ressort **7** sur la tige **2** sont conçus de telle sorte que le ressort **7** puisse suivre les déplacements axiaux et radiaux relatifs des deux tiges **1** et **2** sans subir de détérioration.

## Revendications

1. Système de liaison mécanique et électrique entre les extrémités de deux arbres (1 et 2) sensiblement coaxiaux, qui se déplacent suivant une direction (100) globalement axiale et qui sont aptes à transmettre des efforts sensiblement axiaux, l'un des arbres, appelé "arbre menant" (1), étant relié à un dispositif de mise en translation axiale, typiquement un vérin et l'autre arbre, étant appelé "arbre mené" (2), où
• l'extrémité dudit arbre menant (1) qui est destinée à être mise en liaison avec celle de l'arbre mené (2) comprend une gorge annulaire (11) à proximité d'un prolongement axial d'extrémité (17 et 8), de hauteur axiale H1
• l'extrémité dudit arbre mené (2) qui est destinée à être mise en liaison avec celle de l'arbre menant (1) comprend une gorge annulaire (12) à proximité d'un prolongement axial (18 et 9), de hauteur axiale H2,
• lesdites extrémités sont réunies à l'intérieur d'un manchon (10) sensiblement cylindrique, ledit manchon étant muni:
- d'un premier épaulement annulaire (13),
- d'un deuxième épaulement annulaire (14),
- d'une cavité (16) destinée à recevoir les prolongements axiaux d'extrémité (17 et 8 ; 18 et 9) desdits arbres, la hauteur axiale de ladite cavité (16) étant strictement supérieure à la somme des hauteurs axiales H1 et H2 desdits prolongements axiaux d'extrémités;
**caractérisé en ce que** la forme du premier épaulement annulaire (13) est complémentaire et sans jeu de celle de ladite gorge annulaire (11) située à proximité du prolongement axial d'extrémité (17 et 8) dudit arbre menant (1), la forme du deuxième épaulement annulaire (14) est complémentaire de celle de ladite gorge annulaire (12) située à proximité du prolongement axial d'extrémité (18 et 9) dudit arbre mené (2), un jeu radial (J3) étant prévu entre les surfaces complémentaires de l'épaulement annulaire (14) dudit manchon (10) et de la gorge annulaire (12) dudit arbre mené (2),
• le prolongement axial d'extrémité (17 et 8) de l'arbre menant (1) et le prolongement axial d'extrémité (18 et 9) de l'arbre de l'arbre mené (2) restent en contact mécanique et électrique permanent grâce à un moyen élastique conducteur (7), typiquement un ressort hélicoïdal métallique.

2. Système de liaison mécanique et électrique entre les extrémités de deux arbres (1 et 2) sensiblement coaxiaux selon la revendication 1 dans lequel la gorge annulaire (11) de l'arbre menant (1) présente deux parois perpendiculaires à l'axe (100) distantes d'une hauteur axiale H0 et un fond sous forme de surface cylindrique coaxiale avec ledit axe (100) de diamètre C et dans lequel la section de l'épaulement annulaire (13) de forme complémentaire du manchon (10) présente également deux parois perpendiculaires à l'axe distantes d'une valeur légèrement inférieure à H0, typiquement H0 - ε avec 0,05 mm ≤ ε ≤ 0,2 mm et une paroi cylindrique ayant un diamètre très légèrement supérieur à C, typiquement C + ε' avec 0,05 mm ≤ ε' ≤ 0,2 mm.

3. Système de liaison de deux arbres en translation selon la revendication 1 ou 2 dans lequel la gorge annulaire (12) de l'arbre mené (2) présente deux parois perpendiculaires à l'axe de l'arbre (2) qui sont distantes d'une hauteur axiale H3 et un fond sous forme de surface cylindrique de diamètre ØG et dans lequel l'épaulement annulaire (14) de forme complémentaire du manchon (10) présente également deux parois perpendiculaires à l'axe du manchon et distantes d'une valeur H4 strictement inférieure à H3, ainsi qu'une paroi cylindrique ayant un diamètre strictement supérieur à celui de la gorge annulaire (12) de l'arbre mené (2).

4. Système de liaison mécanique et électrique entre les extrémités de deux arbres (1 et 2) sensiblement coaxiaux selon la revendication 3, dans lequel il existe un jeu radial J1 entre la surface extérieure du prolongement axial d'extrémité (18 et 9) de l'arbre mené (2) et la paroi de la cavité (16) ménagée dans le manchon (10) et destinée à recueillir les prolongements axiaux d'extrémité (1 et 2) des deux arbres.

5. Système de liaison mécanique et électrique entre les extrémités de deux arbres (1 et 2) sensiblement coaxiaux selon la revendication 3, dans lequel la différence entre la hauteur axiale de ladite cavité (16) et la somme des hauteurs axiales H1 et H2 correspond à un jeu maximum J2 entre lesdites extrémités d'arbres et la différence entre la hauteur axiale H3 de la gorge annulaire (12) de l'arbre mené (2) et la hauteur axiale H4 du deuxième épaulement annulaire (14) du manchon (10) correspond à un jeu maximum J4 strictement supérieur au jeu maximum J2 entre lesdites extrémités d'arbres.

6. Système de liaison mécanique et électrique entre les extrémités de deux arbres (1 et 2) sensiblement coaxiaux selon l'une quelconque des revendications 1 à 5 dans lequel le prolongement axial d'extrémité (17 et 8) de l'arbre menant (1) comporte une protubérance (8) dont l'extrémité finale présente une paroi transversale occupant une surface convexe de révolution par rapport à l'axe de l'arbre menant (1), tandis que le prolongement axial d'extrémité (18 et 9) de l'arbre mené (2) comporte une protubérance (9) dont l'extrémité finale présente une paroi transversale dont le profil est tel que, lorsque les deux arbres sont mis en contact, la zone de contact de ladite protubérance (9) avec celle (8) de l'arbre menant (1) se situe en un point aussi proche que possible de l'axe (100) de l'arbre menant (1).

7. Système de liaison mécanique et électrique entre les extrémités de deux arbres (1 et 2) sensiblement coaxiaux selon la revendication 6 dans lequel le prolongement axial d'extrémité (18 et 9) de l'arbre mené (2) comporte une protubérance (9) dont l'extrémité finale présente une paroi transversale occupant une surface convexe de révolution par rapport à l'axe de l'arbre mené (2) dont la courbure en son milieu est plus importante que celle de la paroi transversale de la protubérance (8) de l'arbre menant (1).

8. Système de liaison mécanique et électrique entre les extrémités de deux arbres (1 et 2) sensiblement coaxiaux selon l'une quelconque des revendications 1 à 7 dans lequel les prolongements axiaux d'extrémité de chaque arbre (1, resp. 2) comportent une base (17, resp. 18) située entre la gorge annulaire (13, resp. 14) et la protubérance (7, resp. 8), la base (17, resp. 18) et la protubérance (7, resp. 8) étant agencées de telle sorte que ledit moyen élastique conducteur (7) puisse trouver un appui sur chacun des arbres, permettant ainsi d'assurer en permanence un contact électrique entre les deux arbres.

9. Système de liaison mécanique et électrique entre les extrémités de deux arbres (1 et 2) sensiblement coaxiaux selon l'une quelconque des revendications 1 à 8 dans lequel l'extrémité de l'arbre menant (1) comprend une gorge annulaire (11) et un prolongement axial d'extrémité (17 et 8) adjacents, de sorte que, la base cylindrique (17) du prolongement axial d'extrémité ayant un diamètre supérieur à celui de la gorge annulaire (11), il se forme une paroi transversale destinée à entrer en contact avec le premier épaulement (13) du manchon et dans lequel l'arbre mené (2) comprend une gorge annulaire (12) et un prolongement axial d'extrémité (18 et 9) adjacents, de sorte que, la base cylindrique (18) du prolongement axial d'extrémité ayant un diamètre supérieur à celui de la gorge annulaire (12), il se forme une paroi transversale destinée à entrer en contact avec le deuxième épaulement (14) du manchon, ledit deuxième épaulement étant séparé du premier épaulement de telle sorte qu'ils délimitent ensemble dans ledit manchon la cavité (16) destinée à recevoir lesdits prolongements axiaux d'extrémité des arbres.

10. Système de liaison mécanique et électrique entre les extrémités de deux arbres (1 et 2) sensiblement coaxiaux selon l'une quelconque des revendications 1 à 9 dans lequel ledit manchon (10) comprend deux coquilles (3 et 4) en forme de demi-cylindre, comportant sur leur face intérieure ledit premier épaulement (13) et ledit deuxième épaulement (14), lesdites coquilles étant placées de telle sorte que le premier épaulement (13) et le deuxième épaulement (14) viennent en regard des gorges annulaires (11, resp. 12) des arbres menant (1) et mené (2), et étant maintenues solidaires l'une de l'autre à l'aide d'un fourreau cylindrique (5) emmanché par une extrémité sur l'un des arbres (1)

11. Système de liaison mécanique et électrique entre les extrémités de deux arbres (1 et 2) sensiblement coaxiaux selon la revendication 10 dans lequel ledit fourreau (5) est immobilisé en une extrémité à l'aide d'un épaulement (15) servant de butée aux coquilles (3 et 4) et en l'autre extrémité par un moyen de fixation solidarisant chaque coquille avec le fourreau (5), typiquement une goupille (6) traversant ledit fourreau.

12. Equipement de cuve de production d'aluminium par électrolyse comportant un système de liaison mécanique et électrique entre les extrémités d'un arbre menant (1) et d'un arbre mené (2) sensiblement coaxiaux selon l'une quelconque des revendications 1 à 11.

13. Dispositif de piquage et de mesure, destiné à mesurer, après perçage de la croûte superficielle de bain solidifié, la température et le niveau de l'électrolyte dans une cuve de production d'aluminium par électrolyse ignée d'alumine dissoute dans ledit électrolyte, ledit dispositif étant **caractérisé en ce qu'**il comprend un système de liaison mécanique et électrique entre les extrémités d'un arbre menant (1) et d'un arbre mené (2) sensiblement coaxiaux selon l'une quelconque des revendications 1 à 11, dans lequel ledit arbre menant (1) est la tige du vérin pneumatique de piquage et ledit arbre mené (2) est la tige rallonge qui supporte la partie destinée à plonger dans l'électrolyte.

## Claims

1. Mechanical and electrical connection system between the ends of two approximately coaxial shafts (1 and 2) that move along a globally axial direction (100) and are capable of transmitting approximately axial forces, one of the shafts called the "driving shaft" (1) being connected to an axial translation device, typically a jack, and the other shaft called the "driven shaft" (2),wherein:
• the end of the said driving shaft (1) that will come into contact with the end of the driven shaft (2) comprises an annular groove (11) close to an axial end prolongation (17 and 8), with axial height H1,
• the end of the said driven shaft (2) that will come into contact with the end of the driving shaft (1) comprises an annular groove (12) close to an axial prolongation (18 and 9), with axial height H2,
• the said ends are connected inside an approximately cylindrical coupling (10), the said coupling being provided with:
- a first annular shoulder (13),
- a second annular shoulder (14),
- a cavity (16) that will contain the end axial prolongations (17 and 8; 18 and 9) of the said shafts, the axial height of the said cavity (16) being greater than the sum of the axial heights H1 and H2 of the said end axial prolongations;
**characterised in that**
- the shape of the first annular shoulder (13) is complementary to the shape of the said annular groove (11) located close to the end axial prolongation (17 and 8) of the said driving shaft (1), without clearance,
- the shape of the second annular shoulder (14) is complementary to the shape of the said annular groove (12) close to the end axial prolongation (18 and 9) of the said driven shaft (2), a radial clearance (J3) being provided between the complementary surfaces of the annular shoulder (14) of the said coupling (10) and the annular groove (12) of the said driven shaft (2)
- the end axial prolongation (17 and 8) of the driving shaft (1) and the end axial prolongation (18 and 9) of the driven shaft (2) remain in permanent mechanical and electrical contact due to an elastic conducting means (7), typically a metallic helical spring.

2. Mechanical and electrical connection system between the ends of two approximately coaxial shafts (1 and 2) according to claim 1, in which the annular groove (11) of the driving shaft (1) has two walls perpendicular to the centre line (100) separated by a distance equal to an axial height H0, and a bottom in the form of a cylindrical surface coaxial with the said centre line (100) with diameter C and in which the section of the annular shoulder (13) has a shape complementary to the shape of the coupling (10) and also has two walls perpendicular to the centre line separated by a distance equal to a value slightly less than H0, typically H0 - ε, where 0.05 mm ≤ ε ≤ 0.2 mm, and a cylindrical wall with a diameter very slightly greater than C, typically C + ε', where 0.05 mm ≤ ε' ≤ 0.2 mm.

3. System for connecting two shafts in translation according to either claim 1 or 2, in which the annular groove (12) of the driven shaft (2) has two walls perpendicular to the centre line of the shaft (2) separated by a distance equal to an axial height H3, and a bottom in the form of a cylindrical surface with diameter ØG and in which the annular shoulder (14) with a complementary shape to the coupling (10) has also two walls perpendicular to the centre line of the coupling and separated by a distance equal to a value H4 less than H3, and a cylindrical wall with a diameter greater than the diameter of the annular groove (12) of the driven shaft (2).

4. Mechanical and electrical connection system between the ends of two approximately coaxial shafts (1 and 2) according to claim 3, in which there is a radial clearance J1 between the outer surface of the end axial prolongation (18 and 9) of the driven shaft (2) and the wall of the cavity (16) formed in the coupling (10) and designed to hold the end axial prolongations (1 and 2) of the two shafts.

5. Mechanical and electrical connection system between the ends of two approximately coaxial shafts (1 and 2) according to claim 3, in which the difference between the axial height of the said cavity (16) and the sum of the axial heights H1 and H2 corresponds to a maximum clearance J2 between the said shaft ends and the difference between the axial height H3 of the annular groove (12) of the driven shaft (2) and the axial height H4 of the second annular shoulder (14) of the coupling (10) corresponds to a maximum clearance J4 greater than the maximum clearance J2 between the said shaft ends.

6. Mechanical and electrical connection system between the ends of two approximately coaxial shafts (1 and 2) according to any one of claims 1 to 5, in which the end axial prolongation (17 and 8) of the driving shaft (1) comprises a protuberance (8), the final end of which has a transverse wall that occupies a convex surface of revolution with respect to the centre line of the driving shaft (1), while the end axial prolongation (18 and 9) of the driven shaft (2) comprises a protuberance (9), the final end of which has a transverse wall with a profile such that when the two shafts are put into contact, the contact area between the said protuberance (9) and the protuberance (8) of the driving shaft (1) is located at a point as close as possible to the centre line (100) of the driving shaft (1).

7. Mechanical and electrical connection system between the ends of two approximately coaxial shafts (1 and 2) according to claim 6, in which the end axial prolongation (18 and 9) of the driven shaft (2) comprises a protuberance (9) for which the final end has a transverse wall that occupies a convex surface of revolution about the centre line of the driven shaft (2), with a greater curvature at its mid-point than the curvature of the transverse wall of the protuberance (8) of the driving shaft (1).

8. Mechanical and electrical connection system between the ends of two approximately coaxial shafts (1 and 2) according to any one of claims 1 to 7, in which the end axial prolongations of each shaft (1 and 2) comprise a base (17 and 18 respectively) located between the annular groove (13 and 14 respectively) and the protuberance (7 and 8 respectively), the base (17 and 18 respectively) and the protuberance (7 and 8 respectively) being arranged such that the said elastic conducting means (7) can bear on each of the shafts, such that there is a continuous electrical contact between the two shafts.

9. Mechanical and electrical connection system between the ends of two approximately coaxial shafts (1 and 2) according to any one of claims 1 to 8, in which the end of the driving shaft (1) comprises an annular groove (11) and an end axial prolongation (17 and 8) adjacent to each other, such that since the cylindrical base (17) of the end axial prolongation has a diameter greater than the diameter of the annular groove (11), a transverse wall is formed that will come into contact with the first shoulder (13) of the coupling and in which the driven shaft (2) comprises an annular groove (12) and an end axial prolongation (18 and 9) that are adjacent to each other, such that since the cylindrical base (18) of the end axial prolongation has a diameter greater than the diameter of the annular groove (12), a transverse wall is formed that will come into contact with the second shoulder (14) of the coupling, the said second shoulder being separated from the first shoulder such that together they delimit the cavity (16) within the said coupling into which the end axial prolongations of the shaft will fit.

10. Mechanical and electrical connection system between the ends of two approximately coaxial shafts (1 and 2) according to any one of claims 1 to 9, in which the said coupling (10) comprises two shells (3 and 4) in the form of half cylinders, comprising the said first shoulder (13) and the said second shoulder (14) on their inner face, the said shells being placed such that the first shoulder (13) and the second shoulder (14) are facing the annular grooves (11 and 12 respectively) in the driving shaft (1) and the driven shaft (2), and being held fixed to each other by means of a cylindrical sleeve (5) slid onto one end of one of the shafts (1).

11. Mechanical and electrical connection system between the ends of two approximately coaxial shafts (1 and 2) according to claim 10, in which the said sleeve (5) is fixed in place at one end using a shoulder (15) acting as a stop to the shells (3 and 4) and at the other end using an attachment means fixing each shell in place with the sleeve (5), typically a pin (6) passing through the said sleeve.

12. Electrolytic aluminium production pot equipment comprising a mechanical and electrical connection system between the ends of a driving shaft (1) and a driven shaft (2) approximately coaxial to each other, according to any one of claims 1 to 11.

13. Crustbreaking and measuring device, used to break the surface crust of the solidified bath and measure the temperature and level of the electrolyte in a pot for the production of aluminium by fused bath electrolysis of the alumina dissolved in the said electrolyte, the said device being **characterised in that** it comprises a mechanical and electrical connecting system between the ends of an approximately coaxial driving shaft (1) and a driven shaft (2) according to any one of claims 1 to 11, in which the said driving shaft (1) is the rod of the pneumatic crustbreaking jack and the said driven shaft (2) is the extension rod that supports the chisel that will plunge into the electrolyte.

## Patentansprüche

1. Mechanisch-elektrisches Verbindungssystem zwischen den Enden zweier weitgehend koaxialer Wellen (1 und 2), welche sich in eine insgesamt axiale Richtung (100) bewegen und zur Übertragung weitgehend axialer Kräfte geeignet sind, wobei eine der Wellen, die sog. "Antriebswelle" (1), mit einer Vorrichtung zur Ausführung einer axialen Translationsbewegung, typischerweise einem Zylinder verbunden ist und die andere Welle "angetriebene Welle" (2) genannt wird, bei dem
• das Ende der Antriebswelle (1), das mit demjenigen der angetriebenen Welle (2) verbunden wird, in der Nähe eines axialen Endfortsatzes (17 und 8) eine Ringnut (11) mit der axialen Höhe H1 aufweist,
• das Ende der angetriebenen Welle (2), das mit demjenigen der Antriebswelle (1) verbunden wird, in der Nähe eines axialen Fortsatzes (18 und 9) eine Ringnut (12) mit der axialen Höhe H2 aufweist,
• die Enden im Innern einer weitgehend zylindrischen Muffe (10) vereinigt werden, wobei die Muffe versehen ist
- mit einer ersten Ringschulter (13),
- mit einer zweiten Ringschulter (14),
- mit einem Hohlraum (16) zur Aufnahme der axialen Endfortsätze (17 und 8; 18 und 9) der Wellen, wobei die axiale Höhe des Hohlraums (16) strikt größer als die Summe der axialen Höhen H1 und H2 der axialen Endfortsätze ist;
**dadurch gekennzeichnet, dass**
• die Form der ersten Ringschulter (13) spielfrei und komplementär zu derjenigen der Ringnut (11) ist, welche in der Nähe des axialen Endfortsatzes (17 und 8) der Antriebswelle (1) liegt,
• die Form der zweiten Ringschulter (14) komplementär zu derjenigen der Ringnut (12) ist, welche in der Nähe des axialen Endfortsatzes (18 und 9) der angetriebenen Welle (2) liegt, wobei zwischen den komplementären Flächen der Ringschulter (14) der Muffe (10) und der Ringnut (14) der angetriebenen Welle (2) ein radiales Spiel (J3) vorgesehen ist,
• der axiale Endfortsatz (17 und 8) der Antriebswelle (1) und der axiale Endfortsatz (18 und 9) der angetriebenen Welle (2) durch ein leitendes elastisches Mittel (7), typischerweise eine metallische Spiralfeder, in permanentem mechanisch-elektrischen Kontakt bleiben.

2. Mechanisch-elektrisches Verbindungssystem zwischen den Enden zweier weitgehend koaxialer Wellen (1 und 2) nach Anspruch 1, bei dem die Ringnut (11) der Antriebswelle (1) zwei quer zur Achse (100) liegende, um eine axiale Höhe H0 voneinander beabstandete Wandungen und einen Boden in Form einer mit der Achse (100) koaxialen zylindrischen Fläche mit dem Durchmesser C aufweist und bei dem der Abschnitt der zur Muffe (10) komplementär ausgebildeten Ringschulter (13) ebenfalls zwei quer zur Achse liegende, um einen geringfügig kleineren Wert als H0, typischerweise H0 - ε mit 0,05 mm ≤ ε ≤ 0,2 mm, voneinander beabstandete Wandungen sowie eine zylindrische Wandung aufweist, die einen sehr geringfügig größeren Durchmesser als C hat, typischerweise C + ε' mit 0,05 mm ≤ ε' ≤ 0,2 mm.

3. System zur Verbindung zweier translatorisch bewegter Wellen nach Anspruch 1 oder 2, bei dem die Ringnut (12) der angetriebenen Welle (2) zwei quer zur Achse der Welle (2) liegende, um eine axiale Höhe H3 voneinander beabstandete Wandungen und einen Boden in Form einer zylindrischen Fläche mit dem Durchmesser ØG aufweist und bei dem die zur Muffe (10) komplementär ausgebildete Ringschulter (14) ebenfalls zwei quer zur Muffe liegende, um einen Wert H4 strikt kleiner als H3 voneinander beabstandete Wandungen sowie eine zylindrische Wandung aufweist, die einen strikt größeren Durchmesser als die Ringnut (12) der angetriebenen Welle (2) hat.

4. Mechanisch-elektrisches Verbindungssystem zwischen den Enden zweier weitgehend koaxialer Wellen (1 und 2) nach Anspruch 3, bei dem zwischen der Außenfläche des axialen Endfortsatzes (18 und 9) der angetriebenen Welle (2) und der Wandung des in der Muffe (10) ausgebildeten Hohlraums (16) zur Aufnahme der axialen Endfortsätze (1 und 2) der beiden Wellen ein radiales Spiel J1 vorliegt.

5. Mechanisch-elektrisches Verbindungssystem zwischen den Enden zweier weitgehend koaxialer Wellen (1 und 2) nach Anspruch 3, bei dem die Differenz zwischen der axialen Höhe des Hohlraums (16) und der Summe der axialen Höhen H1 und H2 einem maximalen Spiel J2 zwischen den Wellenenden entspricht und die Differenz zwischen der axialen Höhe H3 der Ringnut (12) der angetriebenen Welle (2) und der axialen Höhe H4 der zweiten Ringschulter (14) der Muffe (10) einem maximalen Spiel J4 entspricht, das strikt größer ist als das maximale Spiel J2 zwischen den Wellenenden.

6. Mechanisch-elektrisches Verbindungssystem zwischen den Enden zweier weitgehend koaxialer Wellen (1 und 2) nach irgendeinem der Ansprüche 1 bis 5, bei dem der axiale Endfortsatz (17 und 8) der Antriebswelle (1) einen Vorsprung (8) umfasst, dessen äußerstes Ende eine eine konvexe Drehfläche zur Achse der Antriebswelle (1) einnehmende Querwandung aufweist, während der axiale Endfortsatz (18 und 9) der angetriebenen Welle (2) einen Vorsprung (9) umfasst, dessen äußerstes Ende eine Querwandung mit einer solchen Form aufweist, dass bei Kontakt der beiden Wellen die Kontaktfläche des Vorsprungs (9) mit demjenigen (8) der Antriebswelle (1) an einem so nahe wie möglich an der Achse (100) der Antriebswelle (1) gelegenen Punkt liegt.

7. Mechanisch-elektrisches Verbindungssystem zwischen den Enden zweier weitgehend koaxialer Wellen (1 und 2) nach Anspruch 6, bei dem der axiale Endfortsatz (18 und 9) der angetriebenen Welle (2) einen Vorsprung (9) umfasst, dessen äußerstes Ende eine eine konvexe Drehfläche zur Achse der angetriebenen Welle (2) einnehmende Querwandung aufweist, deren Wölbung stärker ist als diejenige der Querwandung des Vorsprungs (8) der Antriebswelle (1).

8. Mechanisch-elektrisches Verbindungssystem zwischen den Enden zweier weitgehend koaxialer Wellen (1 und 2) nach irgendeinem der Ansprüche 1 bis 7, bei dem die axialen Endfortsätze jeder Welle (1 bzw. 2) eine zwischen der Ringnut (13 bzw. 14) und dem Vorsprung (7 bzw. 8) gelegene Basis (17 bzw. 18) aufweisen, wobei die Basis (17 bzw. 18) und der Vorsprung (7 bzw. 8) so angeordnet sind, dass sich das leitende elastische Mittel (7) an jeder der Wellen abstützen kann und auf diese Weise ein elektrischer Kontakt zwischen den beiden Wellen permanent gewährleistet ist.

9. Mechanisch-elektrisches Verbindungssystem zwischen den Enden zweier weitgehend koaxialer Wellen (1 und 2) nach irgendeinem der Ansprüche 1 bis 8, bei dem das Ende der Antriebswelle (1) eine Ringnut (11) und einen axialen Endfortsatz (17 und 8) aufweist, welche aneinander grenzen, so dass aufgrund des größeren Durchmessers der zylindrischen Basis (17) des axialen Endfortsatzes verglichen mit der Ringnut (11) eine Querwandung entsteht, die mit der ersten Schulter (13) der Muffe in Kontakt kommt, und bei dem die angetriebene Welle (2) eine Ringnut (12) und einen axialen Endfortsatz (18 und 9) aufweist, welche aneinander grenzen, so dass aufgrund des größeren Durchmessers der zylindrischen Basis (18) des axialen Endfortsatzes verglichen mit der Ringnut (12) eine Querwandung entsteht, die mit der zweiten Schulter (14) der Muffe in Kontakt kommt, wobei die zweite Schulter von der ersten Schulter getrennt ist, derart, dass sie in der Muffe gemeinsam den Hohlraum (16) zur Aufnahme der axialen Endfortsätze der Wellen abgrenzen.

10. Mechanisch-elektrisches Verbindungssystem zwischen den Enden zweier weitgehend koaxialer Wellen (1 und 2) nach irgendeinem der Ansprüche 1 bis 9, bei dem die Muffe (10) aus zwei Schalen (3 und 4) in halbzylindrischer Form besteht, die an ihrer Innenseite die erste Schulter (13) und die zweite Schulter (14) aufweisen, wobei die Schalen so angeordnet sind, dass die erste Schulter (13) und die zweite Schulter (14) den Ringnuten (11 bzw. 12) der Antriebswelle (1) und der angetriebenen Welle (2) gegenüberliegen, und mit Hilfe einer zylindrischen Hülse (5), die mit einem Ende auf eine der Wellen (1) geschoben ist, zusammengehalten werden.

11. Mechanisch-elektrisches Verbindungssystem zwischen den Enden zweier weitgehend koaxialer Wellen (1 und 2) nach Anspruch 10, bei dem die Hülse (5) an einem Ende mit einer als Anschlag für die Schalen (3 und 4) dienenden Schulter (15) und am anderen Ende mit einem jede Schale fest mit der Hülse (5) verbindenden Befestigungsmittel festgelegt ist, typischerweise einem durch die Hülse geführten Stift (6).

12. Einrichtung für eine Elektrolysezelle zur Gewinnung von Aluminium mit einem mechanisch-elektrischen Verbindungssystem zwischen den Enden einer Antriebswelle (1) und einer angetriebenen Welle (2), welche weitgehend koaxial sind, nach irgendeinem der Ansprüche 1 bis 11.

13. Stech- und Messvorrichtung, welche dazu bestimmt ist, nach Durchstechen der Oberflächenkruste aus erstarrtem Elektrolyten die Temperatur und Höhe des Elektrolyten in einer Elektrolysezelle zur Gewinnung von Aluminium durch Schmelzflusselektrolyse des im Elektrolyten gelösten Aluminiumoxids zu messen, wobei die Vorrichtung **dadurch gekennzeichnet ist, dass** sie ein mechanisch-elektrisches Verbindungssystem zwischen den Enden einer Antriebswelle (1) und einer angetriebenen Welle (2), welche weitgehend koaxial sind, nach irgendeinem der Ansprüche 1 bis 11 aufweist, bei dem die Antriebswelle (1) die Kolbenstange des pneumatischen Stechzylinders ist und die angetriebene Welle (2) die Verlängerung mit dem Teil ist, der in den Elektrolyten eintaucht.
